# EUROPEAN PATENT SPECIFICATION

(11) **EP 3 209 703 B1**
(45) Date of publication and mention of the grant of the patent: **14.04.2021**
(21) Application number: 15770607.8
(22) Date of filing: 18.09.2015
(51) Int. Cl.: C08G 63/16, C08G 63/181

(54) **POLYESTERS**
POLYESTER
POLYESTERS

(30) Priority: 22.10.2014 GB 201418762
(43) Date of publication of application: 30.08.2017
(73) Proprietor: Croda International PLC, Goole, Yorkshire DN14 9AA (GB)
(72) Inventor: HONCOOP, Wilhelmus Adrianus Jacobus, NL-2861 TM Bergambacht (NL); SMITS, Angela Leonarda Maria, NL-3708 CB Zeist (NL)
(74) Representative: King, Angela Louise
(86) International application number: PCT/GB2015/052695
(87) International publication number: WO 2016/062999

(56) References cited:
- WO-A2-2014/029975
- US-A- 3 025 266
- US-A- 4 124 571

## Description

The present invention relates to polyesters and more particularly to oil-modified polyesters also known as alkyds, a coating composition comprising the polyester, the use of the polyester and a method of making the coating composition.

Polyesters are well known materials with wide uses in surface coatings e.g. paints. Generally, they are film forming substances which are the products of esterification of polybasic acids and polyhydric alcohols. They can be either saturated or unsaturated. Typical applications of polyesters include resins and coatings such as decorative coatings, wood coatings, can and coil coatings, industrial enamels, domestic appliances coatings and stoving enamels.

An alkyd resin is a type of polyester. Alkyd resins are the largest group of synthetic resins used in the coating industry and comprise polyester resins which include residues of polybasic (for example, di-basic) acid(s) and polyhydroxy (for example, tri- or higher hydroxy) alcohols and further including monobasic fatty acid residues. The monobasic residues may be derived (directly or indirectly) from oils (fatty acid triglycerides) and alkyd resins are also referred to as oil modified polyester resins. Alkyds used in surface coatings are generally curable usually either from residual carboxyl and hydroxyl functionality or by unsaturation (often multiple unsaturation) in the monobasic fatty acid residues.

Alkyds may include other residues and/or additives to provide specific functionality for the intended end use e. g. sources of additional carboxyl groups may be included to improve water compatibility. Alkyds have found widespread use in paints, particularly solvent based paints. In developing low VOC formulations, much effort has been directed to making aqueous emulsions of alkyd resins, (including those using mixed solvent/water vehicles). The alkyds are usually formed into an emulsion before incorporation into the paint and emulsification typically involves formation of an alkyd in water emulsion in which the alkyd is dispersed in the water phase as uniformly and generally as finely as possible. To do this emulsifiers, either as single components or in combination, are commonly used.

Aromatic carboxylic acids are often used in polyesters for use in coating compositions. However, the use of aromatic carboxylic acids may not provide the combination of properties required in the coating composition US 3 025 266 A is directed to polyester compositions that may be used as coatings. Examples II, III and V disclose a polyester obtained from ethylene glycol as a polyol, dimethyl terephthalate as aromatic carboxylic acid and dimethyl ester of 1,20-icosane dioate.

The present invention seeks to provide an improved coating composition, and/or a polyester which may be used in making the coating composition, in which one or more properties (e.g. physical properties) of the coating composition is improved. These improved properties may include one or more of UV stability, gloss, hardness, adhesion, chemical resistance, impact resistance, resistance to yellowing, drying time or an improvement in a combination of these properties.

The present invention is based in part on the recognition by the applicant that an aliphatic dicarboxylic acid comprising from 16 to 30 carbon atoms may be used to replace some or all of the aromatic carboxylic acid and/or anhydride (such as isophthalic acid or phthalic acid/anhydride) which is often present in a polyester for use in a coating composition. This replacement may improve one or more of the above mentioned properties without excessively reducing the hardness of the cured coating which is one of the major reasons for including an aromatic acid in the polyester. Without being bound by theory, it is believed that the length of the carbon chain in the C16 to C30 aliphatic dicarboxylic acid may provide an improved balance of crystallinity/rigidity and UV stability when compared with shorter aliphatic diacids (such as adipic acid) having lower rigidity and when compared with aromatic acids having lower UV stability.

Thus viewed from a first aspect, the present invention provides a polyester which is the reaction product of reactants in accordance with claim 1 comprising:
(A) an aliphatic linear C18 or C26 dicarboxylic acid;
(B) an aromatic carboxylic acid and/or anhydride; and
(C) a polyol.

Viewed from a second aspect, the present invention provides a coating composition comprising a polyester of the first aspect.

Viewed from a third aspect, the present invention provides a method of making a coating composition comprising the steps of:
(i) obtaining a polyester of the first aspect; and
(ii) including the polyester in a coating composition.

Viewed from a fourth aspect, the present invention provides the use of at least 2 wt% of a linear aliphatic dicarboxylic acid comprising from 16 to 30 carbon atoms as a replacement for at least 2 wt% of an aromatic carboxylic acid and/or anhydride in a polyester composition, the wt% being on the basis of the total polyester composition, for improving the UV resistance and/or stability of the polyester composition. The improvement in UV resistance and/or stability may be determined by measuring the loss of gloss over 500 hours in a cured coating composition comprising the polyester composition. At least 5wt% of the aromatic carboxylic acid and/or anhydride may be replaced by an equivalent amount of the linear aliphatic dicarboxylic acid, preferably at least 10wt% is replaced.

It will be understood that any upper or lower quantity or range limit used herein may be independently combined.

It will be understood that, when describing the number of carbon atoms in a substituent group (e.g. 'C1 to C6'), the number refers to the total number of carbon atoms present in the substituent group, including any present in any branched groups. Additionally, when describing the number of carbon atoms in, for example fatty acids, this refers to the total number of carbon atoms including the one at the carboxylic acid, and any present in any branch groups.

Many of the chemicals which may be used to produce the polyester of the present invention are obtained from natural sources. Such chemicals typically include a mixture of chemical species due to their natural origin. Due to the presence of such mixtures, various parameters defined herein can be an average value and may be non-integral.

The term 'polyol' is well known in the art, and refers to a molecule comprising more than one hydroxyl group. The term 'active hydrogen' refers to the hydrogen atoms present as part of the hydroxyl groups of the polyol.

The term 'polyester' as used herein refers to a molecule or group with more than one ester bond.

The term 'dimer fatty acid' (also referred to as dimer fatty diacid) is well known in the art, and refers to the dimerisation products of mono- or polyunsaturated fatty acids and/or esters thereof. The related term trimer fatty acid similarly refers to trimerisation products of mono- or polyunsaturated fatty acids and/or esters thereof.

Dimer fatty acids are described in T. E. Breuer, 'Dimer Acids', in J. I. Kroschwitz (ed.), Kirk-Othmer Encyclopedia of Chemical Technology, 4th Ed., Wily, New York, 1993, Vol. 8, pp. 223-237. They are prepared by polymerising fatty acids under pressure, and then removing most of the unreacted fatty acid starting materials by distillation. The final product usually contains some small amounts of mono fatty acid and trimer fatty acids, but is mostly made up of dimer fatty acids. The resultant product can be prepared with various proportions of the different fatty acids as desired. The dimer fatty acids may be hydrogenated. The dimer fatty acids may be non-hydrogenated.

Suitable dimer fatty acids are preferably derived from (i.e. are the dimer equivalents of) the dimerisation products of oleic acid, linoleic acid, linolenic acid, and therefore comprise on average around 36 carbon atoms. Dimer fatty acids are not linear diacids.

The reactants used to make the polyester comprise (A), (B) and (C).

### (A) an aliphatic dicarboxylic acid comprising from 16 to 30 carbon atoms.

The aliphatic dicarboxylic acid comprising from 16 to 30 carbon atoms (A) is not a dimer fatty acid. The aliphatic dicarboxylic acid (A) may include the esters thereof, preferably alkyl esters and more preferably dimethyl esters. The aliphatic dicarboxylic acid (A) may be linear or branched, preferably linear. It may comprise terminal carboxyl groups, wherein the terminal carboxyl groups are bridged by an alkyl group, or an alkenyl group. The aliphatic dicarboxylic acid (A) may be saturated or unsaturated, preferably saturated.

The aliphatic dicarboxylic acid (A) may comprise from 17 to 27 carbon atoms. The aliphatic dicarboxylic acid (A) may be a C18 and/or C26 dicarboxylic acid. The aliphatic dicarboxylic acid (A) may be a C18 dicarboxylic acid. The aliphatic dicarboxylic acid (A) may be a C26 dicarboxylic acid. In accordance with the invention of claim 1 the aliphatic dicarboxylic acid is an aliphatic linear C18 or C26 dicarboxylic acid.

The aliphatic dicarboxylic acid (A) may be derived or obtained from a metathesis reaction, preferably a self-metathesis reaction. The aliphatic dicarboxylic acid (A) may be obtainable from a metathesis reaction, preferably a self-metathesis reaction. The metathesis reaction may occur in the presence of a catalyst. Suitable metathesis catalysts are disclosed in WO2008/065187 and WO2008/034552.

Particularly preferred examples of suitable metathesis catalysts may be selected from:
[1,3-bis(2,6-diisopropylphenyl)-2-imidazolidinylidene]dichloro[2-(1-methylacetoxy) phenyl]methyleneruthenium(II);
[1 ,3-bis(2,4,6-trimethylphenyl)-2-imidazolidinylidene]dichloro[2-(1-methylacetoxy) phenyl]methyleneruthenium(II);
[1,3-bis(2,6-diisopropylphenyl)-2-imidazolidinylidene]dichloro[[2-(2-oxopropoxy) phenyl]methylene]ruthenium(II);
[1,3-bis(2,4,6-trimethylphenyl)-2-imidazolidinylidene]dichloro[[2-(2-oxopropoxy) phenyl]methylene]ruthenium(II);
([1,3-bis(2,4,6-trimethylphenyl)-2-imidazolidinyliden]dichloro[(2-isopropoxy)(5-trifluoracetamido)benzyliden]]ruthenium(II));
([1,3-bis(2,6-diisopropylphenyl)-2-imidazolidinyliden]dichloro[(2-isopropoxy)(5-trifluoracetamido)benzyliden]]ruthenium(II));
([1,3-bis(2,6-diisopropylphenyl)-2-imidazolidinyliden]dichloro[(2-isopropoxy)(5-isobutoxyacetamido)benzyliden]]ruthenium(II));
([1,3-bis(2,4,6-trimethylphenyl)-2-imidazolidinyliden]dichloro[(2-isopropoxy)(5-isobutoxyacetamido)benzyliden]]ruthenium(II));
([1,3-bis(2,6-diisopropylphenyl)-2-imidazolidinyliden]dichloro[(2-isopropoxy)(5-ethylesteracetamido)benzyliden]]ruthenium(II)); or
((1,3-bis(2,6-diisopropylphenyl)-imidazol idin-2-yliden) ((2-ethyl-3-oxo-3,4, -dihydr-2H-benzo[b][1,4]oxazin-8-yl)methylene)ruthenium(II)chlorid).

The metathesis reaction may use a fatty acid as a feedstock. The fatty acid may be from a renewable and/or bio-based source. The aliphatic dicarboxylic acid (A) is preferably derived from renewable and/or bio-based sources. The level of this may be determinable by ASTM D6866 as a standardised analytical method for determining the bio-based content of samples using ¹⁴C radiocarbon dating. ASTM D6866 distinguishes carbon resulting from bio-based inputs from those derived from fossil-based inputs. Using this standard, a percentage of carbon from renewable sources can be calculated from the total carbon in the sample.

The aliphatic dicarboxylic acid (A) may have a renewable carbon content of at least 50 wt% when determined using ASTM D6866, preferably at least 65 wt%, more preferably at least 80 wt%.

The polyester may comprise at least 2 wt% of (A), preferably at least 5 wt%, more preferably at least 10 wt%. The polyester may comprise at most 65 wt% of (A), preferably at most 45 wt%, more preferably at most 35 wt%. These amounts of (A) may provide a suitable amount of hardness to a coating composition comprising the polyester.

### (B) an aromatic carboxylic acid and/or anhydride.

The aromatic carboxylic acid and/or anhydride (B) may comprise in the range from 2 to 6, preferably 2 to 4, and particularly 2 or 3 carboxylic groups. The carboxylic groups may be in anhydride form.

The aromatic carboxylic acid and/or anhydride may be selected from benzoic acid, phthalic acid, isophthalic acid, terephthalic acid, tetrahydrophthalic acid, trimelletic acid, pyromelletic acid and/or anhydrides thereof. Preferably the aromatic carboxylic acid and/or anhydride is selected from benzoic acid, phthalic acid, isophthalic acid, terephthalic acid and/or anhydrides thereof. Preferably the aromatic carboxylic acid and/or anhydride is a diacid or triacid.

The polyester may comprise at least 5 wt% of (B), preferably at least 7 wt%, more preferably at least 10 wt%, yet more preferably at least 17 wt%. The polyester may comprise at most 70 wt% of (B), preferably at most 50 wt%, more preferably at most 40 wt%. These amounts of (B) may provide a suitable amount of hardness to a coating composition comprising the polyester.

### (C) a polyol.

The at least one polyol (C) preferably comprises in the range from 2 to 6, more preferably 2 to 4, and particularly 2 or 3 hydroxyl groups.

The polyol may be selected from ethylene glycol, 1,2-propanediol, 1,3-propanediol, 1,4-butylene glycol, 1,3-butylene glycol, neopentyl glycol, 2-butyl-2-ethyl-I,3-propanediol, di(hydroxymethyl)furan, di(hydroxymethyl)- tetrahydrofuran, pentaerythritol spiroglycol, isosorbide, isomannide, isoidide, glycerol, di-glycerol, trimethylolethane, trimethylolpropane, trimethylolbutane, di-trimethylolethane, di-trimethylolpropane, di-trimethylolbutane, pentarerythritol, di-pentaerythritol, tri-pentaerythritol, anhydroennea-heptitol, sorbitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether, and di-trimethylolbutane di(meth)allyl ether.

The polyol may be a neopentyl polyol. The polyol may be selected from neopentylglycol, trimethylolpropane, trimethylolethane, monopentaerythritol, ditrimethylolpropane, dipentaerythritol, tripentaerythritol, tetrapentaerythritol and mixtures thereof. Preferably the at least one polyol is selected from neopentyl glycol, trimethylolpropane and pentarerythritol.

The polyol may be a polyalkoxylated polyol.

The polyester may comprise at least 10 wt% of (C), preferably at least 15 wt%, more preferably at least 20 wt%. The polyester may comprise at most 65 wt% of (C), preferably at most 55 wt%, more preferably at most 45 wt%.

### Other Reactants

The reactants used to make the polyester may further comprise:
(D) an aliphatic dicarboxylic acid comprising less than 16 carbon atoms or a cycloaliphatic carboxylic acid.

The reactant (D) may comprise from 4 to 10 carbon atoms, preferably from 6 to 10 carbon atoms.

The reactant (D) may be selected from 1,2-cyclohexanedicarboxylic acid, 1,3-cyclohexanedicarboxylic acid, 1,4-cyclohexandicarboxylic acid, maleic acid, fumaric acid, adipic acid, azelaic acid, succinic acid, sebacic acid, itaconic acid, citraconic acid and/or anhydrides thereof.

The polyester may comprise at least 5 wt% of (D), preferably at least 10 wt%, more preferably at least 20 wt%. The polyester may comprise at most 50 wt% of (D), preferably at most 40 wt%, more preferably at most 30 wt%.

The reactants used to make the polyester may further comprise a dimer or trimer fatty acid. The polyester may comprise at least 5wt% dimer or trimer fatty acid. The polyester may comprise at most 50wt% dimer or trimer fatty acid.

### The Polyester

The polyester may comprise at least 2 ester bonds, preferably at least 3 ester bonds, more preferably at least 4 ester bonds, even more preferably at least 5 ester bonds. The polyester may comprise at most 20 ester bonds, preferably at most 10 ester bonds,

The weight ratio of (A) to (B) in the polyester may be at least 0.1:1, preferably at least 0.2:1, more preferably at least 0.5:1. The weight ratio of (A) to (B) in the polyester may be at most 10:1, preferably at most 5:1, more preferably at most 2:1. The weight ratio of (A) to (B) in the polyester may be from 0.2:1 to 5:1, preferably from 0.5:1 to 2:1.

The polyester may consist of the reaction product of:
(A) an aliphatic dicarboxylic acid comprising from 16 to 30 carbon atoms;
(B) an aromatic carboxylic acid and/or anhydride; and
(C) at least one polyol.

In the polyester, (B) may be selected from benzoic acid, phthalic acid, isophthalic acid, terephthalic acid, tetrahydrophthalic acid, trimelletic acid, pyromelletic acid and/or anhydrides thereof; and (C) may be a neopentyl polyol.

The polyester may have a molecular weight of at least 500, preferably at least 750, more preferably at least 900. The polyester may have a molecular weight of at most 10,000, preferably at most 7,500, more preferably at most 6,000. The polyester may have a molecular weight in the range from 500 to 10,000 g/mol. The molecular weight may be a number average molecular weight. The molecular weight may be determined by Gel Permeation Chromatography (GPC) or by end-group analysis. Preferably the molecular weight is determined by end group analysis.

Water-based coatings may require a water-dispersible polyester. The polyester may be water-dispersible. The reactants for the polyester may comprise an anhydride selected from trimellitic anhydride, phthalic anhydride, hexahydrophthalic anhydride, tetrahydrophthalic anhydride, methyl hexahydrophthalic anhydride, succinic anhydride and maleic anhydride. The amount of anhydride may be effective to make the polyester water dispersible. The reactants may comprise at least 5wt% anhydride, preferably at least 10wt% anhydride. The reactants may comprise at most 50wt% anhydride, preferably at most 40wt% anhydride.

The anhydride may be reacted with the reaction product of the other reactants at a temperature ranging from 140°C to 170°C in order to render the polyester water dispersible. At this temperature range, the anhydride ring "opens" and a reaction occurs between the anhydride and a hydroxyl functional group of the reaction product such that an ester bond is formed between the anhydride and the reaction product to produce the polyester. The inclusion of the anhydride in the polyester may increases the dispersability (e.g. water dispersability) of the polyester.

The polyester may further comprise a monocarboxylic acid (e.g. fatty acid), or corresponding triglyceride (e.g. fatty acid oil). This may be selected from caproic acid, capric acid, castor fatty acid or oil, coconut fatty acid or oil, cottonseed fatty acid or oil, acrylic acid, methacrylic acid, crotonic acid, iso-crotonic acid, 2-ethylhexanoic acid, 2-propylheptanoic acid, lauric acid, linoleic acid, oleic acid, pelargonic acid, soybean fatty acid or oil, tall oil fatty acid, safflower fatty acid or oil, linseed fatty acid or oil, sunflower fatty acid or oil, linolenic acid, eleostearic acid, tung oil, poppy seed oil, perilla oil, oiticia oil, fish oil, dehydrated castor oil or fatty acid, almond oil, bassau oil, cocoa butter oil, macadamia oil, olive oil, peanut oil and/or nahar seed oil. The polyester may comprise at least 10wt% monocarboxylic acid, preferably at least 20wt%. The polyester may comprise at most 90wt% monocarboxylic acid, preferably at most 80wt%.

The polyester may be an alkyd resin. Alkyd resins are classified by 'oil length'. The oil length is defined as the weight percent of oil or triglyceride equivalent, or fatty acids in the finished resin. Alkyd resins are typically classified into four classes by oil length: very long over 70wt%, long 56-70wt%, medium 46-55wt% and short below 45wt%. The alkyd resin may be a medium oil or long oil resin, preferably a long oil resin.

Preferably the reactants for the polyester further comprise a fatty acid and/or a fatty acid triglyceride and the polyester is an alkyd resin.

Preferably, the polyester is for use in a coating composition.

### Coating Composition

A coating composition comprising the polyester may further comprise a pigment. The pigment may be selected from metallic oxides such as titanium dioxide, zinc oxide, iron oxides of various colors, carbon black, filler pigments such as talc, china clay, barytes, carbonates, silicates, organic colored pigments such as quinacridones, copper phthalocyanines, perylenes, azo pigments, indanthrone blues, carbazoles such as carbazole violet, isoindolinones, isoindolones, thioindigo reds, benzimidazolinones and the like.

When the coating contains metallic pigments, agents which inhibit the reaction of the pigments with water may be added. Typical inhibitors are phosphated organic materials such as "Vircopet" 40 available from Mobil Chemical Co.

The pigments may be introduced into the coating composition by first forming a mill base or pigment dispersion with either the polyester resin or dispersant by conventional techniques such as high speed mixing, sand grinding, ball milling, attritor grinding or two roll milling. The mill base is blended with other constituents used in the composition.

The coating composition may comprise from 0.01 to 2wt% of an ultraviolet light stabilizer. The UV stabiliser may be a ultraviolet light absorber, screener and/or quencher. Typical ultraviolet light stabilizers include benzophenones, triazines, triazols, benzoates, hindered amines and blends thereof.

Thickeners and rheology control agents can be included in the coating composition in a total amount of from 0.5 to 10wt% of the coating composition. These may provide a desired spray viscosity. Typically, acrylic polymers such as polyacrylic acid, clays such as "Bentones", cellulosics, silicas, associative thickeners such as "Rheolate" 255, polysaccharides, urethanes or compatible mixtures of any of the above can be added.

The coating composition may comprise about 0.1 to 1.0wt% of an acid catalyst or a salt thereof. The acid catalyst may be a strong acid. Paratoluene sulfonic acid is a preferred catalyst or its ammonium salt. Other catalysts that can be used are dodecyl benzene sulfonic acid, phosphoric acid and amine or ammonium salts of these acids.

The coating composition may be water-based. It may comprise a melamine crosslinking agent. The crosslinking agent may be an alkylated melamine crosslinking agent. The crosslinking agent may be water-soluble or water-dispersible. The crosslinking agent may be partially and/or fully methylated melamine formaldehyde. The crosslinking agent may be polymeric and have a degree of polymerization of about 1 to 3. The crosslinking agent may be a highly methylated melamine resin comprising hexamethoxymethylmelamine (HMMM). The crosslinking agent may be selected from Cymel (TM) 373, Cymel 385 and Cymel 303.

The coating composition may comprise water. The coating composition may comprise at least 5wt% water, preferably at least 10wt%, more preferably at least 20wt%, more preferably at least 30wt%. The coating composition may comprise at most 80wt% water, preferably at most 70wt%. These wt% values may be based on the uncured coating composition.

The coating composition may be solvent-based. The solvent may be an organic solvent. The solvent may be selected from mineral spirits, also known as white spirit, xylene, glycol ethers, ketones, esters and mixtures thereof. The coating composition may comprise at least 5wt% organic solvent, preferably at least 10wt%, more preferably at least 20wt%, more preferably at least 30wt%. The coating composition may comprise at most 70wt% organic solvent, preferably at most 60wt%. These wt% values may be based on the uncured coating composition.

The coating composition may comprise a catalyst for promoting polymerization or crosslinking (curing). These catalysts are often referred to as driers. The drier may be a metallic soap. Examples of driers include cobalt octoate, strontium octoate, copper octoate, zirconium octoate, zinc octoate and calcium octoate. These catalysts are usually used in the form of combinations of two, three or four different metallic soaps. The coating composition may comprise from 0.1 to 5 wt.% drier based on the total weight of the uncured coating composition.

Other ingredients that may be present in the coating composition depend on the envisaged application of the composition. Examples are antisettling agents, anti-sagging agents, de-airing agents, and the like. The sum of the amounts of the various additives will usually not exceed 5 wt.% based on the total weight of the uncured coating composition.

The coating composition (when cured) may have a Konig hardness (measured as described herein) which is greater than 80% of the Konig hardness of a comparative coating composition in which all the reactant (A) is replaced with reactant (B), preferably greater than 90% of the Konig hardness of the comparative composition.

The coating composition may have a drying time which is shorter than the drying time of a coating composition in which all the reactant (A) is replaced with reactant (B).

The coating composition may have a yellowness index which is improved (i.e. shows less yellowing) when compared with a comparative coating composition in which all the reactant (A) is replaced with reactant (B). The yellowness index may be measured as described herein. The coating composition may have a yellowness index of less than 70% of that of the comparative composition, preferably less than 60%, more preferably less than 50%.

The coating composition (when cured) may have a loss of gloss (measured as described herein) which is improved when compared with a coating composition in which all the reactant (A) is replaced with reactant (B). The loss of gloss of the coating composition of the invention may be less than 60%, preferably less than 50%, more preferably less than 40%, especially preferably less than 30% when measured as described herein.

All of the features described herein may be combined with any of the above aspects, in any combination.

### Examples

The present invention will now be described further by way of example only with reference to the following Examples. All parts and percentages are given by weight unless otherwise stated. It will be understood that all tests and physical properties listed have been determined at atmospheric pressure and room temperature (i.e. about 20 °C), unless otherwise stated herein, or unless otherwise stated in the referenced test methods and procedures.

Compounds as used in the following examples are identified as follows:
▪ Trimethyolpropane (TMP)
▪ Neopentyl glycol (NPG)
▪ Trimellitic anhydride
▪ Adipic acid (C6 dicarboxylic acid)
▪ Isophthalic acid
▪ C18 diacid - linear aliphatic C18 dicarboxylic acid produced according to Example M1 below
▪ C26 diacid - linear aliphatic C26 dicarboxylic acid produced according to Example M2 below
▪ PRIPOL 1006 (TM) dimer fatty diacid - a hydrogenated C36 dimer dicarboxylic acid ex Croda
▪ Cymel (TM) 303 - a methylated melamine resin ex Allnex
▪ TEGO (TM) Wet 270 - a wetting agent ex Evonik
▪ Benzoic acid
▪ Pentaerythritol
▪ Phthalic anhydride
▪ Soya fatty acid
▪ Exxol D40 (TM) - dearomatised aliphatic solvent ex Exxon Mobil
▪ Combi APB (TM) - metal combination drier ex Elementis
▪ Meko (TM) - Methyl Ethyl Ketoxime - anti-skinning agent
▪ Dimethylethanolamine
▪ Para-toluenesulfonic acid

Test methods used in the following examples are as follows:
▪ Number average molecular weight was determined by end group analysis with reference to the hydroxyl value.
▪ Hydroxyl value is defined as the number of mg of potassium hydroxide equivalent to the hydroxyl content of 1g of sample, and was measured by acetylation followed by hydrolysation of excess acetic anhydride. The acetic acid formed was subsequently titrated with an ethanolic potassium hydroxide solution.
▪ Acid value is defined as the number of mg of potassium hydroxide required to neutralise the free fatty acids in 1 g of sample, and was measured by direct titration with a standard potassium hydroxide solution.
▪ Konig hardness was measured according to ASTM D4366.
▪ Impact resistance was measured according to ISO 6272-1.
▪ Crosshatch adhesion was measured according to ISO 2409 by visual inspection with damage ratings assigned on the following scale from 0 = undamaged to 5 = complete damage.
▪ Gloss was measured according to ISO 2813.
▪ UV exposure was performed using ASTM G53 after which at 500 hours the gloss was measured again using the above method.
▪ Chemical resistance was measured according to DIN 12720:1997-10 by visual inspection of spot tests with damage ratings assigned on the following scale from 0 = undamaged to 5 = complete damage.
▪ Drying time was measured according to ASTM D5895
▪ Yellowing was measured with the yellowness index according to ASTM E313. Samples were kept in the dark i) for 1 week at room temperature, then ii) in the oven @ 50 °C for 4 weeks.
▪ Viscosity was measured according to ISO 2555.

### Example M1: production of C18 diacid

100 g methyl oleate (purified by aluminium-oxide treatment) was heated to 100 °C. 13 ppm of ([1,3-bis(2,4,6-trimethylphenyl)-2-imidazolidinyliden]dichloro[(2-isopropoxy)(5-trifluoracetamido)benzyliden]ruthenium(II)) was dissolved in 1 ml toluene, and this was added to the methyl oleate.

After 30 seconds 43.6% conversion was reached, and after 120 seconds the reaction equilibrium conversion was reached. The resulting reaction mixture contained 24.8% 9-octadecene, 25.2% 9-octadecenedioic acid dimethyl ester and approximately 50% methyl oleate according to Gas Chromatography analysis. The reaction mixture was treated with a treated clay (Tonsil 210FF, 5g) while stirring at 80 °C for 60 minutes. This mixture was filtered over filter paper to give an essentially catalyst-free product.

The catalyst-free product was purified using fractional distillation under vacuum of 2 to 9 mbar, by first distilling off the alkene and methyl oleate, and then collecting dimethyl octadecenedioate in the temperature range of 220-240 °C. Gas Chromatography analysis indicated a purity of >95%.

Purified dimethyl octadecenedioate (200g) was charged into a 400 ml volume hydrogenation autoclave vessel, 0.18g palladium 5% on carbon hydrogenation catalyst was added, and the autoclave heated to 160 °C under 15 bar of hydrogen for 45 minutes, after which the hydrogen uptake has stopped, indicating reaction completion. The catalyst was filtered, resulting in dimethyl octadecanedioate, >95% purity according to Gas Chromatography analysis.

Dimethyl octadecanedioate (150g) was combined with 300g methanol, 100g water and 200g of a 50% KOH solution in water. This was heated to reflux for 1h, and subsequently cooled to 55°C. 185g of an 85% H₃PO₄ solution in 750 ml water was added gradually upon which a solid precipitate was formed which was stirred for 1h. The solids were filtered off and washed with water until the filtrate had neutral pH as indicated using indicator paper. The solids were dried under vacuum (approx. 10 mbar, 60 °C) until no further mass loss occurred, resulting in 1,18-octadecanedioic acid. In the following examples, this 1,18-octadecanedioic acid will be referred to as C18 diacid.

### Example M2: production of C26 diacid

100 g methyl erucate (purified by aluminium-oxide treatment) was heated to 100°C. 105 ppm of ([1,3-bis(2,4,6-trimethylphenyl)-2-imidazolidinyliden]dichloro[(2-isopropoxy)(5-trifluoracetamido)benzyliden]]ruthenium(II) was dissolved in 1 ml toluene, and this was added to the methyl erucate.

After 30 seconds the reaction equilibrium conversion was reached. The resulting reaction mixture contained 20.6% 9-octadecene, 28.4% 13-hexacosenedioic acid dimethyl ester and approximately 50% methyl erucate according to Gas Chromatography analysis.

In order to produce 1,26-hexacosanediacid (C26 diacid) from this reaction mixture, the same steps were followed as given above in Example M1 for octadecanedioic acid (C18 diacid). However, the fractional distillation step was modified in that the product (dimethyl hexacosenedioiate) remained in the bottom fraction of the distillation due to its high molecular weight. In the following examples, the 1,26-hexacosanedioic acid produced by this example will be referred to as C26 diacid.

### Comparative Example PES1: a polyester not according to the invention

26 parts by weight of trimethylolpropane, 120.8 parts of neopentyl glycol, 56.4 parts of adipic acid, and 128.4 parts of isophthalic acid were introduced into a four-necked flask equipped with a reflux condenser, thermometer, stirring means and nitrogen inlet tube. The temperature was raised to 150°C, after which it was further raised to 230 °C in 3.5 hours and condensation accompanied by the elimination of water was carried out until the polyester acid value fell below 10. Subsequently, the reaction temperature was lowered to 150 °C and, after introducing 24.7 parts of trimellitic anhydride, the temperature was raised to 160-170 °C and this reaction temperature was then maintained for 30 minutes. Next, the temperature was increased to 180°C and the reaction continued at this temperature. Once the polyester acid value had attained the planned acid value of 45-50, the reaction temperature was lowered to 120 °C and 77 parts of ethylene glycol monobutyl ether was added. A polyester resin (PES1) of 80 wt% solids was produced.

### Example PES2: a polyester including C18 diacid

18.6 parts by weight of trimethylolpropane, 86.1 parts of neopentyl glycol, 40.3 parts of adipic acid, and 164.9 parts of C18 diacid (from Example M1) were introduced into a four-necked flask equipped with a reflux condenser, thermometer, stirring means and nitrogen inlet tube. The temperature was raised to 150 °C, after which it was further raised to 230 °C in 3.5 hours and condensation accompanied by the elimination of water was carried out until the polyester acid value fell below 10. Subsequently, the reaction temperature was lowered to 150 °C and, after introducing 17.6 parts of trimellitic anhydride, the temperature was raised to 160-170°C and this reaction temperature was then maintained for 30 minutes. Next, the temperature was increased to 180°C and the reaction continued at this temperature. Once the polyester acid value had attained the planned acid value of 45-50, the reaction temperature was lowered to 120 °C and 75 parts of ethylene glycol monobutyl ether was added. A polyester resin (PES2) of 80 wt% solids was produced.

### Example PES3: a polyester including C18 diacid

21.1 parts by weight of trimethylolpropane, 98.1 parts of neopentyl glycol, 104.2 parts of isophthalic acid and 85 parts of C18 diacid (from Example M1) were introduced into a four-necked flask equipped with a reflux condenser, thermometer, stirring means and nitrogen inlet tube. The temperature was raised to 150 °C, after which it was further raised to 230 °C in 3.5 hours and condensation accompanied by the elimination of water was carried out until the polyester acid value fell below 10. Subsequently, the reaction temperature was lowered to 150 °C and, after introducing 23.6 parts of trimellitic anhydride, the temperature was raised to 160-170 °C and this reaction temperature was then maintained for 30 minutes. Next, the temperature was increased to 180°C and the reaction continued at this temperature. Once the polyester acid value had attained the planned acid value of 45-50, the reaction temperature was lowered to 120 °C and 75 parts of ethylene glycol monobutyl ether was added. A polyester resin (PES3) of 80 wt% solids was produced.

### Comparative Example PES4: a polyester not according to the invention

21.1 parts by weight of trimethylolpropane, 96.1 parts of neopentyl glycol, 119 parts of isophthalic acid and 84.9 parts of C36 diacid (PRIPOL 1006) were introduced into a four-necked flask equipped with a reflux condenser, thermometer, stirring means and nitrogen inlet tube. The temperature was raised to 150 °C, after which it was further raised to 230 °C in 3.5 hours and condensation accompanied by the elimination of water was carried out until the polyester acid value fell below 10. Subsequently, the reaction temperature was lowered to 150°C and, after introducing 24.8 parts of trimellitic anhydride, the temperature was raised to 160-170 °C and this reaction temperature was then maintained for 30 minutes. Next, the temperature was increased to 180°C and the reaction continued at this temperature. Once the polyester acid value had attained the planned acid value of 45-50, the reaction temperature was lowered to 120 °C and 75 parts of ethylene glycol monobutyl ether was added. A polyester resin (PES4) of 80 wt% solids was produced.

### Properties of PES1 to PES4

A comparison of various properties of the polyesters PES1 to PES4 is given in Table 1 below.

**Table 1: properties of PES1 to PES 4**

| | **PES1** | **PES2** | **PES3** | **PES4** |
|---|---|---|---|---|
| Acid value (mg KOH/g) | 48.5 | 42 | 44 | 44 |
| OH-value (mg KOH/g) | 85.5 | 84.5 | 85.3 | 85 |
| Molecular weight number average (g/mol) | 1343 | 1344 | 1344 | 1348 |
| | | | | |
| Adipic acid (wt% on resin) | 18 | 14 | - | - |
| Isophthalic acid (wt% on resin) | 41 | - | 35 | 38 |
| C18-diacid (wt% on resin) | - | 55 | 28 | - |
| C36-diacid (wt% on resin) | - | - | - | 25 |
| Adipic acid (mol% on resin) | 14 | 15 | - | - |
| Isophthalic acid (mol% on resin) | 30 | - | 30 | 44 |
| C18-diacid (mol% on resin) | - | 28 | 13 | - |
| C36-diacid (mol% on resin) | - | - | - | 7 |

### Examples WB1 to WB4 - production of water-based compositions from PES1 to PES4

To 100 parts by weight of each polyester resin PES1 to PES4 with a temperature of 50 °C, 6.6 parts of dimethylethanolamine was slowly added while stirring and then a thorough stirring was performed. Next, 155 parts of deionized water was added and well-mixed therein, and a water-soluble or water-dispersible polyester resin was obtained. These water-based compositions WB1 to WB4 yielded a 40 wt% non-volatile material with a pH of 8-8.5.

### Examples C1 to C4 - production and evaluation of coating compositions from WB1 to WB4

To 100 parts by weight of WB1 to WB4, 6.9 parts of Cymel® 303 was slowly added while stirring and then thorough stirring was performed. Next, 0.5 wt% of the catalyst p-toluenesulfonic acid (50wt% in ethanol) and 1 wt% of the wetting agent TEGO® Wet 270 were added. The resulting coating compositions are referred to as C1 to C4.

Coating compositions C1 to C4 were applied wet in a 50µm layer to a steel Q panel (QD-36) and cured for 10 minutes at 160°C. Various properties of the cured coatings were evaluated and the results are given in Table 2 below.

**Table 2: properties of cured coatings C1 to C4**

| | **C1** | **C2** | **C3** | **C4** |
|---|---|---|---|---|
| König Hardness (s) | 176 | 175 | 170 | 150 |
| Impact resistance (kg.cm) @ RT | | | | |
| a) direct | 200 | 200 | 200 | 200 |
| b) indirect | 200 | 200 | 200 | 200 |
| Crosshatch adhesion¹⁾ | 0 | 0 | 0 | 0 |
| Gloss 20° (GU) | 89 | 90 | 97 | 97 |
| Loss of Gloss 20° after UV exposure over 500h ²⁾ | -80% | -11% | -50% | -40% |

| Chemical resistance ³⁾ to: | | | | |
|---|---|---|---|---|
| Ammonia (10%) (2min) | 1 | 0 | 0 | 0 |
| EtOH (50%) (1 hour) | 1-2 | 0 | 0 | 0 |
| Acetic acid (1h) | 2-3 | 2-3 | 2-3 | 2-3 |
| Acetone (10s) | 2 | 0-1 | 0-1 | 0-1 |
| Ethylacetate (10s) | 2 | 0-1 | 0-1 | 0-1 |
| Water (16h) | 0 | 0 | 0 | 0 |

| | | | | |
|---|---|---|---|---|
| 1) Crosshatch adhesion: damage ratings (0 = undamaged and 5 = complete damage) 2) UV exposure according to ASTM G53: UV-B, cycle 8h light @ 40 °C / 8h dark @ 60 °C 3) Chemical resistance: damage ratings (0 = undamaged and 5 = complete damage). | | | | |

It can be seen from the results in Table 2 that the coating C2 based on PES2 (including linear aliphatic C18 diacid) exhibits a similar Konig hardness as C1 based on PES1 which includes an aromatic diacid (isopthalic acid) instead of C18 diacid. C2 also has similar or improved chemical resistance when compared with C1. Furthermore it can be seen from the results that coating C2 exhibits a similar initial gloss as C1. However after being exposed to UV-B in a cycle of 8h light @ 40 °C and 8h dark @ 60 °C for 500h, a significant loss of gloss is noticed with the C1 coating (-80%) whereas the C2 coating exhibits only a small loss of gloss (-11%). This indicates that the inclusion of the C18 diacid as replacement for an aromatic diacid maintains the hardness and chemical resistance of a cured coating while improving its UV resistance and/or stability.

The inclusion of the C18 diacid in PES2 and PES3 results in no decrease of adhesion, chemical resistance and impact properties in coatings C2 and C3 when compared with C1. Coating C3 exhibits a similar hardness when compared with coatings C1 and C2. However, when the C18 diacid in coating C3 is replace with C36 dimer diacid in C4 (from PES4) then the hardness of C4 drops significantly when compared with C3. Without being bound by theory, it is believed that on this basis the C18 diacid of C3 can act as a replacement for aromatic diacid without unduly reducing the hardness of a cured coating, while the C36 dimer diacid of C4 cannot be used in this way without significantly reducing the hardness of the cured coating.

### Comparative Example PES5 - a polyester not according to the invention

10.5 g of benzoic acid, 65.6 g of pentaerythritol, 66 g of phthalic anhydride, 231.7 g of soya fatty acid and 3wt% of xylene were charged into a reactor equipped with a Dean-stark distillation head, total condenser, agitator, inert gas sparge and thermometer. The mixture was heated to 220-240 °C and esterified until an acid value of approx. 5-10 mg KOH/g was obtained. The resin was cooled to 200 °C and the xylene was removed by means of vacuum distillation. The resulting polyester (alkyd) resin (PES5) was cooled to 100 °C and discharged.

### Example PES6 - a polyester including C18 diacid

The procedure of Comparative Example PES5 was repeated using the following ingredients: 6.2 g of benzoic acid, 52.7 g of pentaerythritol, 99.3 g of C18 diacid (from Example M1), 217.2 g of soya fatty acid and 3wt% of xylene. The resulting polyester (alkyd) resin is PES6.

### Example PES7 - a polyester including C18 diacid

The procedure of Comparative Example PES5 was repeated using the following ingredients: 9.7 g of benzoic acid, 60.1 g of pentaerythritol, 33.3 g of C18 diacid (from Example M1), 40 g of phthalic anhydride, 230.9 g of soya fatty acid and 3wt% of xylene. The resulting polyester (alkyd) resin is PES7.

### Properties of PES5 to PES7

A comparison of various properties of the polyesters PES5 to PES7 is given in Table 3 below.

**Table 3: Properties of PES5 to PES7**

| | **PES5** | | **PES6** | | **PES7** | |
|---|---|---|---|---|---|---|
| | **Wt (g)** | **Mols** | **Wt (g)** | **Mols** | **Wt (g)** | **Mols** |
| Benzoic acid | 10.5 | 0.086 | 6.2 | 0.05 | 9.7 | 0.08 |
| C18 diacid | - | - | 99.3 | 0.32 | 33.3 | 0.11 |
| Pentaerythritol | 65.3 | 0.48 | 52.7 | 0.39 | 60.1 | 0.44 |
| Phthalic anhydride | 66 | 0.45 | - | - | 40 | 0.27 |
| Soya fatty acid | 231.7 | 0.84 | 217.2 | 0.78 | 230.9 | 0.83 |
| Acid value (mg KOH/g) | 9.5 | | 8.9 | | 9.2 | |
| Viscosity (mPa.s) @ 23 °C 85% solid in xylene | 740 | | 2864 | | 528 | |
| Colour (Gardner 63) | 4.6 | | 4.6 | | 4.1 | |
| Oil Length (%) | 69 | | 65 | | 69 | |

### Examples C5 to C7 - production and evaluation of coating compositions from PES5 to PES7

Organic solvent based coating compositions C5 to C7 were prepared from polyesters PES5 to PES7 by preparing the mixtures shown in Table 4 below. All quantities in Table 4 are parts by weight.

**Table 4: Coating Compositions C5 to C7 in parts by weight**

| | **C5** | **C6** | **C7** |
|---|---|---|---|
| PES5 | 60 | - | - |
| PES6 | - | 60 | - |
| PES7 | - | - | 60 |
| Exxsol D40¹⁾ | 15 | 15 | 15 |
| Combi APB²⁾ | 3.4 | 3.4 | 3.4 |
| Meko³⁾ | 0.2 | 0.2 | 0.2 |

| | | | |
|---|---|---|---|
| 1) Dearomatised aliphatic solvent 2) Metal combination drier 3) Anti-skinning agent | | | |

The coating compositions C5 to C7 were applied wet in a 100µm layer to a glass panel with an applicator. Various properties of the coatings were evaluated and the results are given in Table 5 below.

**Table 5: properties of C5 to C7**

| | **C5** | **C6** | **C7** |
|---|---|---|---|
| Time to Dry (hours:mins) | 10:00 | 2:45 | 6:00 |
| König Hardness after 1 week | 15 | 56 | 15 |
| Yellowness index after 4 weeks | 12 | 5 | 11 |

It can be seen from Table 5 that the drying time is improved in C6 and C7 which include C18 diacid when compared with C5 with no C18 diacid. Konig Hardness and yellowness index are similar for C5 (no C18 diacid) and C7 which has some phthalic anhydride replaced by C18 diacid. C6 which has all phthalic anhydride replaced by C18 diacid has better hardness and less yellowing than either C5 or C7.

It is to be understood that the invention is not to be limited to the details of the above embodiments, which are described by way of example only. Many variations are possible.

## Claims

1. A polyester which is the reaction product of reactants comprising:
(A) an aliphatic linear C18 or C26 dicarboxylic acid;
(B) an aromatic carboxylic acid and/or anhydride; and
(C) a polyol.

2. A polyester as claimed in claim 1, wherein the weight ratio of (A) to (B) in the polyester is from 0.2:1 to 5:1, preferably from 0.5:1 to 2:1.

3. A polyester as claimed in claim 1 or 2 which has a molecular weight in the range from 500 to 10,000 g/mol, measured as indicated in the description.

4. A polyester as claimed in any preceding claim wherein (A) is obtained by a metathesis reaction, preferably a self-metathesis reaction.

5. A polyester as claimed in any preceding claim wherein the reactants further comprise:
(D) an aliphatic dicarboxylic acid comprising less than 16 carbon atoms or a cycloaliphatic carboxylic acid.

6. A polyester as claimed in any preceding claim wherein:
(B) is selected from benzoic acid, phthalic acid, isophthalic acid, terephthalic acid, tetrahydrophthalic acid, trimelletic acid, pyromelletic acid and/or anhydrides thereof; and
(C) is a neopentyl polyol.

7. A polyester as claimed in any preceding claim wherein the reactants comprise an anhydride selected from trimellitic anhydride, phthalic anhydride, hexahydrophthalic anhydride, tetrahydrophthalic anhydride, methyl hexahydrophthalic anhydride, succinic anhydride and maleic anhydride and wherein the polyester is water dispersible.

8. A polyester as claimed in any of claims 1 to 6 wherein the reactants further comprise a fatty acid and/or a fatty acid triglyceride and wherein the polyester is an alkyd resin.

9. A polyester as claimed in any preceding claim wherein the polyester is for use in a coating composition.

10. A coating composition comprising a polyester as claimed in any of claims 1 to 9.

11. A coating composition as claimed in claim 10 which further comprises at least 10wt% water.

12. A coating composition as claimed in claim 10 which further comprises at least 5wt% organic solvent.

13. A method of making a coating composition comprising the steps of:
(i) obtaining a polyester as claimed in any of claims 1 to 9; and
(ii) including the polyester in a coating composition.

14. Use of at least 2 wt% of a linear aliphatic dicarboxylic acid comprising from 16 to 30 carbon atoms as a replacement for at least 2 wt% of an aromatic carboxylic acid and/or anhydride in a polyester composition, the wt% being on the basis of the total polyester composition, for improving the UV resistance and/or stability of the polyester composition.

15. Use as claimed in claim 14 wherein the improvement in UV resistance and/or stability is determined by measuring, according to the specification, the loss of gloss over 500 hours in a cured coating composition comprising the polyester composition.

## Patentansprüche

1. Polyester, bei dem es sich um das Reaktionsprodukt von Edukten handelt, die Folgendes umfassen:
(A) eine aliphatische lineare C18- oder C26-Dicarbonsäure;
(B) eine aromatische Carbonsäure und/oder Anhydrid davon; und
(C) ein Polyol.

2. Polyester nach Anspruch 1, wobei das Gewichtsverhältnis von (A) zu (B) in dem Polyester 0,2:1 bis 5:1, vorzugsweise 0,5:1 bis 2:1, beträgt.

3. Polyester nach Anspruch 1 oder 2, der ein wie in der Beschreibung angegeben gemessenes Molekulargewicht im Bereich von 500 bis 10.000 g/mol aufweist.

4. Polyester nach einem der vorhergehenden Ansprüche, wobei (A) durch eine Metathesereaktion, vorzugsweise eine Selbstmetathesereaktion, erhalten wird.

5. Polyester nach einem der vorhergehenden Ansprüche, wobei die Edukte ferner Folgendes umfassen:
(D) eine weniger als 16 Kohlenstoffatome umfassende aliphatische Dicarbonsäure oder eine cycloaliphatische Carbonsäure.

6. Polyester nach einem der vorhergehenden Ansprüche, wobei:
(B) aus Benzoesäure, Phthalsäure, Isophthalsäure, Terephthalsäure, Tetrahydrophthalsäure, Trimellitsäure, Pyromellitsäure und/oder Anhydriden davon ausgewählt ist; und
(C) ein Neopentylpolyol ist.

7. Polyester nach einem der vorhergehenden Ansprüche, wobei die Edukte ein aus Trimellitsäureanhydrid, Phthalsäureanhydrid, Hexahydrophthalsäureanhydrid, Tetrahydrophthalsäureanhydrid, Methylhexahydrophthalsäureanhydrid, Bernsteinsäureanhydrid und Maleinsäureanhydrid ausgewähltes Anhydrid umfassen und wobei der Polyester wasserdispergierbar ist.

8. Polyester nach einem der Ansprüche 1 bis 6, wobei die Edukte ferner eine Fettsäure und/oder ein Fettsäuretriglycerid umfassen und wobei es sich bei dem Polyester um ein Alkydharz handelt.

9. Polyester nach einem der vorhergehenden Ansprüche, wobei der Polyester zur Verwendung in einer Beschichtungszusammensetzung bestimmt ist.

10. Beschichtungszusammensetzung, die einen Polyester nach einem der Ansprüche 1 bis 9 umfasst.

11. Beschichtungszusammensetzung nach Anspruch 10, die ferner mindestens 10 Gew.-% Wasser umfasst.

12. Beschichtungszusammensetzung nach Anspruch 10, die ferner mindestens 5 Gew.-% organisches Lösungsmittel umfasst.

13. Verfahren zur Herstellung einer Beschichtungszusammensetzung, das die folgenden Schritte umfasst:
(i) Erhalten eines Polyesters nach einem der Ansprüche 1 bis 9; und
(ii) Einbeziehen des Polyesters in einer Beschichtungszusammensetzung.

14. Verwendung von mindestens 2 Gew.-% einer 16 bis 30 Kohlenstoffatome umfassenden linearen aliphatischen Dicarbonsäure als Ersatz für mindestens 2 Gew.-% einer aromatischen Carbonsäure und/oder eines Anhydrids davon in einer Polyesterzusammensetzung, wobei die Gew.-% sich auf die gesamte Polyesterzusammensetzung beziehen, zur Verbesserung der UV-Beständigkeit und/oder -Stabilität der Polyesterzusammensetzung.

15. Verwendung nach Anspruch 14, wobei die Verbesserung der UV-Beständigkeit und/oder -Stabilität bestimmt wird, indem man den Glanzverlust in einer die Polyesterzusammensetzung umfassenden gehärteten Beschichtungszusammensetzung über 500 Stunden gemäß der Beschreibung misst.

## Revendications

1. Polyester qui est le produit de réaction de réactants comprenant :
(A) un acide dicarboxylique aliphatique linéaire en C₁₈ ou C₂₆ ;
(B) un acide et/ou un anhydride carboxylique(s) aromatique(s) ; et
(C) un polyol.

2. Polyester selon la revendication 1, le rapport pondéral de (A) sur (B) dans le polyester étant de 0,2:1 à 5:1, préférablement de 0,5:1 à 2:1.

3. Polyester selon la revendication 1 ou 2 qui présente un poids moléculaire dans la plage de 500 à 10 000 g/mole, mesuré comme indiqué dans la description.

4. Polyester selon une quelconque revendication précédente, (A) étant obtenu par une réaction de métathèse, préférablement une réaction d'auto-métathèse.

5. Polyester selon une quelconque revendication précédente, les réactants comprenant en outre :
(D) un acide dicarboxylique aliphatique comprenant moins de 16 atomes de carbone ou un acide carboxylique cycloaliphatique.

6. Polyester selon une quelconque revendication précédente :
(B) étant choisi parmi l'acide benzoïque, l'acide phtalique, l'acide isophtalique, l'acide téréphtalique, l'acide tétrahydrophtalique, l'acide trimellitique, l'acide pyromellitique et/ou des anhydrides correspondants ; et
(C) étant un néopentyle polyol.

7. Polyester selon une quelconque revendication précédente, les réactants comprenant un anhydride choisi parmi l'anhydride trimellitique, l'anhydride phtalique, l'anhydride hexahydrophtalique, l'anhydride tétrahydrophtalique, l'anhydride méthyle hexahydrophtalique, l'anhydride succinique et l'anhydride maléique et le polyester étant dispersible dans l'eau.

8. Polyester selon l'une quelconque des revendications 1 à 6, les réactants comprenant en outre un acide gras et/ou un triglycéride d'acide gras et le polyester étant une résine d'alkyde.

9. Polyester selon une quelconque revendication précédente, le polyester étant pour une utilisation dans une composition de revêtement.

10. Composition de revêtement comprenant un polyester selon l'une quelconque des revendications 1 à 9.

11. Composition de revêtement selon la revendication 10 qui comprend en outre au moins 10 % en poids d'eau.

12. Composition de revêtement selon la revendication 10 qui comprend en outre au moins 5 % en poids de solvant organique.

13. Procédé de préparation d'une composition de revêtement comprenant les étapes de :
(i) obtention d'un polyester selon l'une quelconque des revendications 1 à 9 ; et
(ii) inclusion du polyester dans la composition de revêtement.

14. Utilisation d'au moins 2 % en poids d'un acide dicarboxylique aliphatique linéaire comprenant de 16 à 30 atomes de carbone comme remplacement pour au moins 2 % en poids d'un acide et/ou d'un anhydride carboxylique(s) aromatique(s) dans une composition de polyester, les % en poids étant sur la base de la composition totale de polyester, pour l'amélioration de la résistance et/ou de la stabilité aux UV de la composition de polyester.

15. Utilisation selon la revendication 14, l'amélioration de la résistance et/ou de la stabilité aux UV étant déterminée(s) en mesurant, selon la description, la perte de brillance sur 500 heures dans une composition de revêtement durcie comprenant la composition de polyester.
